# EUROPÄISCHE PATENTANMELDUNG

(11) **EP 1 676 938 A1**
(43) Veröffentlichungstag der Anmeldung: **05.07.2006**
(21) Anmeldenummer: 04031008.8
(22) Anmeldetag: 30.12.2004
(51) Int. Cl.: C23C 26/00, C23C 28/00, C23F 1/00, C23C 4/02, F01D 5/28

(54) **Verfahren zur Herstellung eines Bauteils einer Turbine und ein Bauteil einer Turbine**

(71) Anmelder: SIEMENS AKTIENGESELLSCHAFT, 80333 München (DE)
(72) Erfinder: Jabado, Rene, 14199 Berlin (DE); Körtvelyessy, Daniel, 13467 Berlin (DE); Reiche, Ralph, 13465 Berlin (DE); Rindler, Michael, 15566 Schöneiche (DE)

(57) **Zusammenfassung**

Bauteile bilden während ihres Einsatzes Oxidschichten, die jedoch aufgrund ihres unerwünscht schnellen Wachstums zu einer Schädigung des Substrats des Bauteils führen.

Bei dem erfindungsgemäßen Verfahren wird das Bauteil (1) an einem Element verarmt, so dass sich das Wachstum der Oxidschicht (28) verringert.

## Beschreibung

Die Erfindung betrifft ein Verfahren zur Herstellung eines Bauteils gemäß Anspruch 1, bei dem sich eine Oxidschicht ausbilden kann und ein Bauteil gemäß Anspruch 17 oder 18.

Bauteile, die bei hohen Temperaturen eingesetzt werden, bilden oft eine Oxidschicht, wobei "metallische" Atome aus dem Bauteil an die Grenzfläche Bauteil-Metalloxid diffundieren und das Bauteil im Bereich unterhalb der Oxidschicht an diesem Metallelement verarmt.

Heißgasbeaufschlagte Bauteile in Gasturbinen werden oft durch Wärmedämmschichten auf MCrAlX-Haftvermittlerschichten geschützt. Die Haftung der Wärmedämmschicht auf der MCrAlX-Schicht wird im Wesentlichen durch eine Aluminiumoxidschicht zwischen der MCrAlX-Schicht und der Wärmedämmschicht erzeugt. Die Aluminiumoxidschicht (thermal grown oxide - TGO) wächst jedoch während des Betriebes an, bis es letztlich zum Versagen der Haftung kommt.

Häufig werden die MCrAlX-Schichten mit einer Platinierung versehen, die als Diffusionssperre das Wachstum der TGO verlangsamen soll. Zum einen ist dieser Prozess teuer, da reines Platin zur Anwendung kommt und ein zusätzlicher Beschichtungsprozess die Kosten in die Höhe treibt. Zum anderen diffundiert das Platin während des Betriebs in das Substrat des Bauteils. Dies führt jedoch beim so genannten Refurbishment, dem Wiederaufarbeiten des Bauteils, zur Veränderung der bekannten Wiederaufarbeitungsprozesse, da das Platin zu einem verstärkten Angriff von Säure auf das Substrat führt.

Es ist daher Aufgabe der Erfindung ein Verfahren für die Behandlung eines Bauteils aufzuzeigen, wodurch eine Oxidschicht eines Bauteils langsamer wächst.

Die Aufgabe wird durch ein Verfahren gemäß Anspruch 1 gelöst.

Es ist weiterhin Aufgabe der Erfindung ein Bauteil aufzuzeigen, bei dem sich eine Oxidschicht langsamer ausbildet.

Die Aufgabe wird gelöst durch ein Bauteil gemäß Anspruch 17 und 18.

In den Unteransprüchen des Verfahrens und des Bauteils sind weitere vorteilhafte Maßnahmen ausgelistet, die beliebig in vorteilhafter Art und Weise miteinander kombiniert werden können.

Es zeigen
- Figur 1, 2, 3: ein Bauteil, das mittels des erfindungsgemäßen Verfahrens behandelt wird,
- Figur 4, 5: erfindungsgemäße Bauteile
- Figur 6: eine Turbinenschaufel,
- Figur 7: ein Brennkammerelement und
- Figur 8: eine Gasturbine.

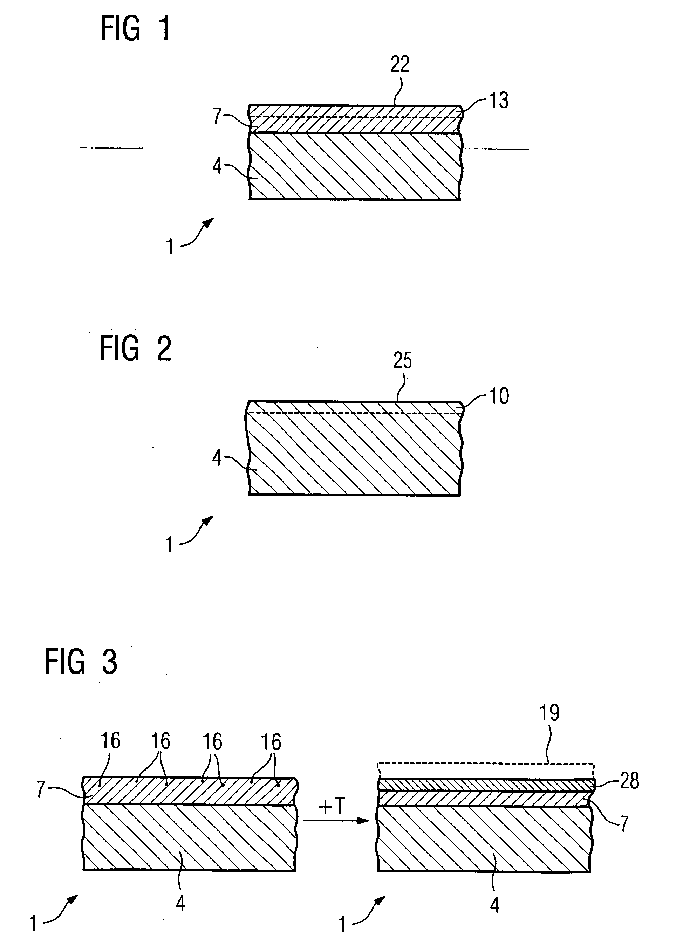

Figur 1 zeigt beispielhaft ein Bauteil 1, das mittels des erfindungsgemäßen Verfahrens behandelt wird.

Das Bauteil 1 besteht beispielsweise aus einem metallischen Substrat 4. Das Substrat 4 kann ein elementares Metall oder eine Legierung sein. Natürlich können auch Sekundärphasen vorhanden sein.

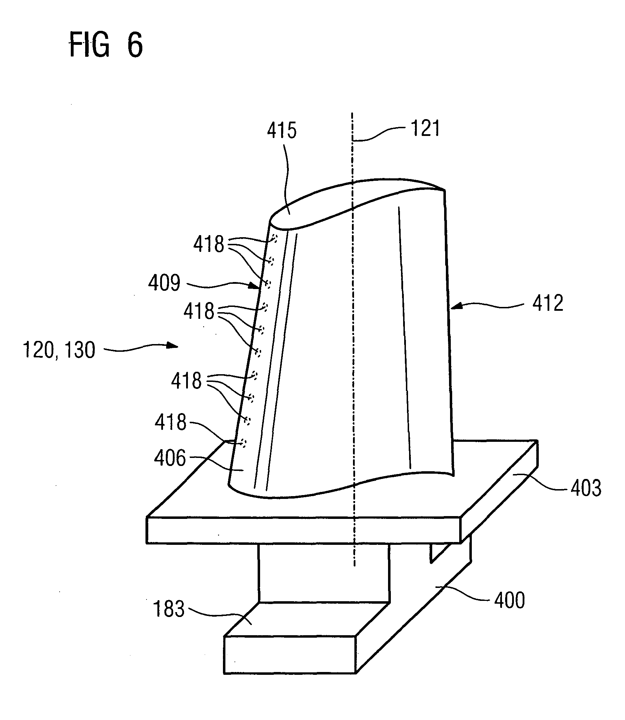

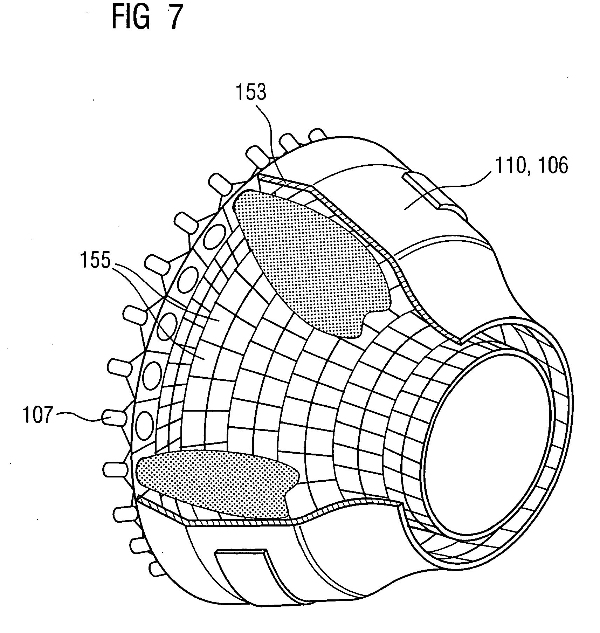

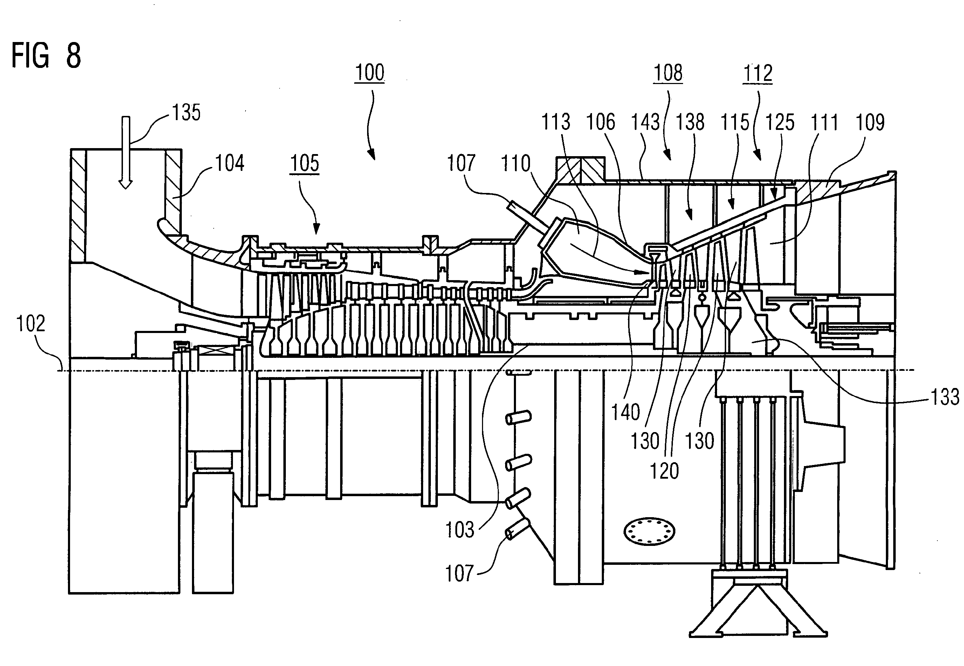

Im Falle von Bauteilen für Turbinen, wie z.B. Turbinenschaufeln 120, 130 (Fig. 6), Hitzeschildelementen 155 (Fig. 7) von Gasturbinen 100 (Fig. 8) oder Dampfturbinen, ist das Substrat 4 eine eisen-, kobalt- oder nickelbasierte Superlegierung.

Auf dem Substrat 4 ist beispielsweise eine Korrosionsschutz- oder Haftvermittlerschicht 7 vorhanden. Sie besteht im Falle von Turbinenbauteilen in der Regel aus einer Legierung des Typs MCrAlX.

Die Korrosionsschutzschicht 7 kann im Bereich ihrer äußeren Oberfläche 22 noch alliiert und/oder chromiert worden sein, sodass sich in der Schutzschicht 7 ein Oberflächenbereich 13 ausgebildet hat, der gegenüber dem anderen unterliegenden Bereich der Korrosionsschutzschicht 7 eine erhöhte Konzentration an Aluminium und/oder Chrom aufweist.

Figur 2 zeigt beispielhaft ein weiteres Bauteil 1, das mittels des erfindungsgemäßen Verfahrens behandelt werden kann.

In diesem Fall weist das Bauteil 1 keine Korrosionsschutzschicht auf und ist beispielsweise im Bereich seiner äußeren Oberfläche 25 alitiert und/oder chromiert, sodass sich ein Oberflächenbereich 10 ausgebildet hat, der gegenüber dem restlichen Substrat 4 (beispielsweise aus einer Superlegierung) eine erhöhte Konzentration von Aluminium und/oder Chrom aufweist.

Auf dem Substrat 4 oder auf der Korrosionsschutzschicht 7 bildet sich eine Oxidschicht Me1_{y}Me2_{z}Oₓ und/oder ein Gemisch aus Me1Oₓ und Me2Oₓ zumindest eines Elements Me1, Me2, wobei das zumindest eine Element Me1, Me2 beispielsweise ein Metalloxid bildendes Element ("metallisches Element"), insbesondere Aluminium, ist. Im Falle Aluminium bildet sich Aluminiumoxid Al₂O₃ (Me1=Al, _{Y}=2, z=0, x=3). Es können sich auch von mehreren Elementen Me1, Me2 Oxide bilden, z.B. Cr₂O₃ und Al₂O₃ oder Mischoxide wie La-Al-O.

Erfindungsgemäß wird die Korrosionsschutzschicht 7, die alitierte Korrosionsschutzschicht 7, das Substrat 4 oder das alitierte Substrat 4 einer Behandlung unterzogen, bei der das Metall oder die Legierung an zumindest einem Element Me1, Me2, das eine Oxidschicht 28 (Fig. 3) bildet, verarmt wird. Dabei bilden sich Leerstellen oder lokal verarmte Bereiche 16 im Kristallgitter.
Es findet kein oder kaum Abtrag eines Schichtbereiches an der Oberfläche 22, 25 statt. Vielmehr bilden sich in der Korrosionsschutzschicht 7 oder dem Substrat 4 (nicht dargestellt) lediglich verarmte Bereiche an diesem Element Me1, Me2.
Beispielhaft für eine alitierte und/oder chromierte Korrosionsschutzschicht 7 oder ein Substrat 4 gilt: der Schichtbereich, der an dem Element Aluminium und/oder Chrom verarmt ist, ist aber vorzugsweise dünner als der Schichtbereich 10, 13, der alitiert oder chromiert wurde.

Im Fall der MCrAIX-Schichten oder einer Superlegierung sind die Elemente entweder Aluminium oder Chrom bzw. Chrom und Aluminium, an die das Substrat 4 oder die Schicht 7 verarmt wird.

Die so behandelte Oberfläche 22, 25 kann vor dem Einsatz etwas voroxidiert werden und bildet die Oxidschicht 28, wobei dann eine keramische Wärmedämmschicht 19 (Fig. 3 rechts gestrichelt angedeutet) aufgebracht werden kann. Im Einsatz, d.h. bei hohen Temperaturen T, wächst die Oxidschicht 28 auf der Korrosionsschutzschicht 7 weiter.

Die keramische Wärmedämmschicht 19 kann aber auch ohne Voroxidation direkt auf die Korrosionsschutzschicht 7 oder auf das Substrat 4 mit dem an dem zumindest einen Element Me1, Me2 verarmten Bereichen aufgebracht werden. Dabei bildet sich die Oxidschicht 28 während des Betriebs zwischen der Korrosionsschutzschicht 7 und der keramischen Wärmedämmschicht 19 aus.

Die Verarmung des Substrats 4 oder der Korrosionsschutzschicht 7 an zumindest einem Element Me1, Me2 erfolgt erfindungsgemäß beispielsweise durch eine Behandlung in einer oder mehreren Säuren bzw. Basen oder Basengemischen, einer Elektrolytbehandlung (also unter Anlegen einer elektrischen Spannung) oder Exponierung des Bauteils 1 in einer Umgebung mit zumindest einem Halogen, insbesondere Fluor oder Chlor, oder zumindest einem Halogenid, wie es aus dem Fluoridionenreinigungsprozess bekannt ist.

Durch diese Verarmung wächst die TGO sehr viel langsamer, insbesondere um bis zu ca. 20µm pro Servicezyklus weniger als aus dem Stand der Technik bekannt, wodurch ein Gewinn an einigen Tausend Betriebsstunden des Bauteils 1 bei hohen Temperaturen erreicht wird.

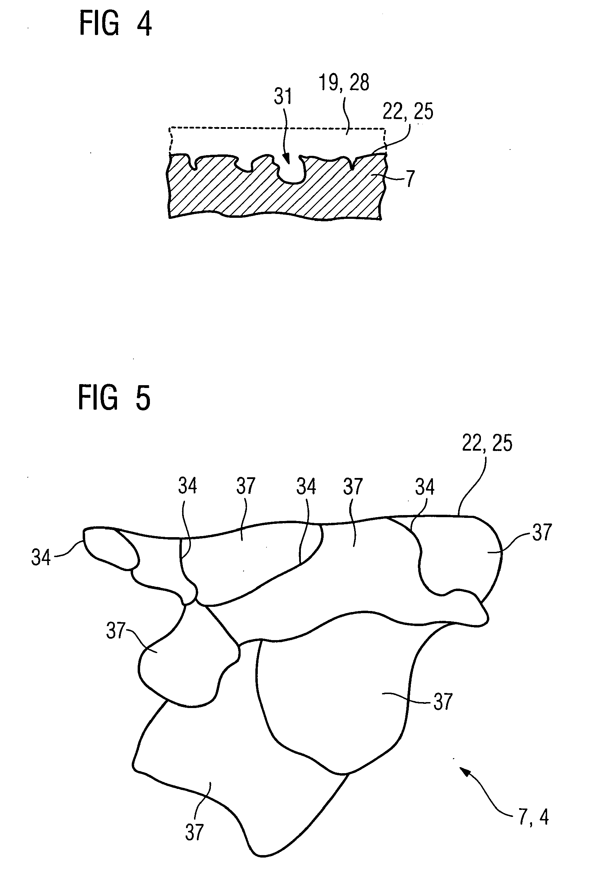

Vorzugsweise kann durch die Behandlung die Oberfläche 22, 25 der Korrosionsschutzschicht 7 oder des Substrats 4 aufgeraut werden, sodass sich Kluften 31 bilden (Fig. 4), wodurch sich eine bessere Haftung der keramischen Wärmedämmschicht 19 insbesondere einer plasmagespritzen Wärmedämmschicht (APS: atmosphärisches Plasmaspritzen, VPS: Vakuumplasmaspritzen, LPPS: Niedrigdruck Plasmaspritzen), ergibt.

Als Korrosionsschutzschicht 7 können beispielsweise die verwendet werden, deren chemische Zusammensetzung aus der EP 0 486 489 B1, EP 0 786 017 B1, EP 0 412 397 B1 oder aus der EP 1 306 454 A1 bekannt sind, wobei die chemische Zusammensetzung diese Korrosionsschutzschichten Gegenstand dieser Offenbarung sein sollen.

Figur 5 zeigt eine vergrößerte Darstellung der Korrosionsschutzschicht 7 oder des Substrats 4.
Die Korrosionsschutzschicht 7 besteht beispielsweise aus einzelnen Körnern 37 (granular oder kolumnar), die untereinander Korngrenzen 34 aufweisen.

Erfindungsgemäß ist auf den Korngrenzen 34 zumindest stellenweise eine Oxidschicht ausgebildet, die insbesondere mit dem erfindungsgemäßen Verfahren vorbereitet wird.

Ein Säure-, Basen- oder Halogenangriff erfolgt insbesondere in die Korngrenzen 34 hinein, da diese gegenüber dem Korn Schwachstellen darstellen, sodass dort hinein bevorzugt ein Angriff erfolgen kann. Während der Beschichtung mit einer keramischen Wärmedämmschicht 19 oder eines Voroxidationsprozesses der Korrosionsschutzschicht 7 bildet sich dann innerhalb der Korngrenzen 34 im Bereich der Oberfläche 22, 29 eine dünne Oxidschicht aus, die die Diffusion des zumindest einen Elements Me1, Me2, insbesondere Aluminium, entlang der Korngrenzen 34 verringert, da die Diffusion bevorzugt entlang der Korngrenzen 34 stattfindet, und das zumindest eine Element Me1, Me2 im Oxid der Korngrenzen 34 einen geringeren Diffusionskoeffizienten aufweist.

Verbrauchte Korrosionsschutzschichten 7 werden für die Wiederaufarbeitung vollständig entfernt, wobei sie in der Regel für 4 - 8 Stunden bei einer erhöhten Temperatur von 50°C - 80°C mit einer Säure behandelt werden.
Die Behandlungszeiten mit einer Säure, einer Base, eines Elektrolyts oder eines Halogens/Halogenids gemäß dem erfindungsgemäßen Verfahren sind demgegenüber erheblich kürzer. Sie sind auf 50%, insbesondere auf 25% dieser üblichen Behandlungszeiten reduziert und betragen maximal 1 Stunde (h), insbesondere ½h.

Die Behandlungstemperaturen können dabei gleich bleiben, liegen aber eher am unteren Ende der für die Entfernung von Korrosionsschutzschichten verwendeten Temperaturbereiche.
So beträgt die Behandlungszeit in einer Salzsäure, beispielsweise mit einer Konzentration von 30%, bei 50°C 30 Minuten. Bei einer elektrolytischen Behandlung kann die Konzentration der Salzsäure beispielsweise auf 5% reduziert werden und auch die Behandlungszeit ist kürzer und liegt beispielsweise bei 10 Minuten. Dabei werden je nach Bauteilgröße Spannungen von 0,1 bis 0,34 Volt angewendet.

Figur 6 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe verwendet.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.
Als Schutz gegen Korrosion weist die Schaufel 120, 130 beispielsweise entsprechende, meistens metallische Beschichtungen (MCrAlX) auf, die mittels des erfindungsgemäßen Verfahrens behandelt werden können und als Schutz gegen Wärme meistens noch eine keramische Beschichtung.

Die Figur 7 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um die Turbinenwelle 103 herum angeordneten Brennern 102 in einen gemeinsamen Brennkammerraum münden. Dazu ist die Brennkammer 110 in ihrer Gesamtheit als ringförmige Struktur ausgestaltet, die um die Turbinenwelle 103 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen. Jedes Hitzeschildelement 155 ist arbeitsmediumsseitig mit einer besonders hitzebeständigen Schutzschicht ausgestattet oder aus hochtemperaturbeständigem Material gefertigt. Aufgrund der hohen Temperaturen im Inneren der Brennkammer 110 ist zudem für die Hitzeschildelemente 155 bzw. für deren Halteelemente ein Kühlsystem vorgesehen.

Die Materialien der Brennkammerwand und deren Beschichtungen können ähnlich der Turbinenschaufeln sein.

Die Figur 8 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung.

Ebenso können die Schaufeln 120, 130 Beschichtungen gegen Korrosion (MCrAlX; M ist zumindest ein Element der Gruppe Eisen [Fe], Kobalt [Co], Nickel [Ni], X ist ein Aktivelement und steht für Yttrium [Y] und/oder Silizium und/oder zumindest ein Element der Seltenen Erden bzw. Hafnium [Hf]) aufweisen, die mit dem erfindungsgemäßen Verfahren behandelt werden können.

Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein, und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Verfahren zur Herstellung eines metallischen Bauteils (1, 120, 130, 138, 150),
das auf einer Oberfläche (22, 25) eine Oxidschicht aus einem oder mehreren Metalloxiden (Me1_{y}Me2_{z}Oₓ, Me1Oₓ, Me2Oₓ) ausbilden kann,
**dadurch gekennzeichnet, dass**
im Bereich der Oberfläche (22, 25) eine Behandlung zur Verarmung zumindest eines ein Metalloxid (Me1_{y}Me2_{z}Oₓ, Me1Oₓ, Me2Oₓ) bildendes Elements (Me1, Me2) durchgeführt wird.

2. Verfahren nach Anspruch 1,
**dadurch gekennzeichnet, dass**
das Bauteil (1) durch eine Behandlung mit einer Säure oder einem Säuregemisch an dem zumindest einen Element (Me1, Me2) verarmt wird.

3. Verfahren nach Anspruch 1,
**dadurch gekennzeichnet, dass**
das Bauteil (1) durch eine Behandlung mit zumindest einer Base an dem zumindest einen Element (Me1, Me2) verarmt wird.

4. Verfahren nach Anspruch 1, 2 oder 3,
**dadurch gekennzeichnet, dass**
das Bauteil (1) durch eine elektrolytische Behandlung an dem zumindest einen Element (Me1, Me2) verarmt wird.

5. Verfahren nach Anspruch 1, 2 oder 3,
**dadurch gekennzeichnet, dass**
das Bauteil (1) zumindest einem Halogen (Chlor, Fluor, ...) oder zumindest einem Halogenid ausgesetzt wird,
wodurch das Bauteil (1) an dem zumindest einen Element (Me1, Me2) verarmt wird.

6. Verfahren nach Anspruch 1, 2, 3, 4 oder 5,
**dadurch gekennzeichnet, dass**
die Behandlungsdauer,
die beim Stand der Technik zur Schichtentfernung verwendet wird,
auf 50%, insbesondere auf 25%
reduziert ist,
um die Verarmung an dem zumindest einen Element (Me1, Me2) zu erreichen.

7. Verfahren nach Anspruch 1, 2, 3, 4, 5 oder 6,
**dadurch gekennzeichnet, dass**
die Behandlungsdauer zur Verarmung maximal 1h, insbesondere ½h beträgt.

8. Verfahren nach Anspruch 1, 2, 3, 4, 5, 6 oder 7,
**dadurch gekennzeichnet, dass**
die Behandlungstemperatur zur Verarmung maximal 80°C insbesondere 50°C beträgt.

9. Verfahren nach Anspruch 1,
**dadurch gekennzeichnet, dass**
das Element (Me1) Aluminium ist.

10. Verfahren-nach Anspruch 1,
**dadurch gekennzeichnet, dass**
das Element (Me2) Chrom ist.

11. Verfahren nach Anspruch 1,
**dadurch gekennzeichnet, dass**
die Elemente (Me1, Me2) Chrom und Aluminium sind.

12. Verfahren nach Anspruch 1,
**dadurch gekennzeichnet, dass**
die Oberfläche (22, 25) nach der Verarmung an dem zumindest einen Element (Me1, Me2) oxidiert wird,
wodurch sich eine Oxidschicht aus Metalloxiden (Me1_{y}Me2_{z}Oₓ, Me1Oₓ, Me2Oₓ) bildet.

13. Verfahren nach Anspruch 12,
**dadurch gekennzeichnet, dass**
eine äußere keramische Schicht (19) auf die Oxidschicht (Me1_{y}Me2_{z}Oₓ, Me1Oₓ, Me2Oₓ) aufgebracht wird.

14. Verfahren nach Anspruch 1,
**dadurch gekennzeichnet, dass**
das Bauteil (1) ein Substrat (4) aus einer eisen-, kobalt- oder nickelbasierte Superlegierung aufweist.

15. Verfahren nach Anspruch 1, 11 oder 14,
**dadurch gekennzeichnet,**
**dass** eine Korrosionsschutzschicht (7) des Typs MCrAlX auf dem Bauteil (1) vorhanden ist, und
**dass** die Korrosionsschutzschicht (7) an zumindest einem Element (Me1, Me2), insbesondere Aluminium (A1), verarmt wird.

16. Verfahren nach Anspruch 14 oder 15,
**dadurch gekennzeichnet, dass**
die Korrosionsschutzschicht (7) und/oder ein Substrat (4) alitiert und/oder chromiert ist.

17. Verfahren nach Anspruch 1, 14 oder 15,
**dadurch gekennzeichnet, dass**
als Bauteil (1) ein Bauteil einer Turbine,
insbesondere einer Gas- (100) oder Dampfturbine, insbesondere eine Turbinenschaufel (120, 130) oder ein Hitzeschildelement (155) behandelt wird.

18. Bauteil (1),
insbesondere hergestellt durch ein Verfahren nach Anspruch 1,
das an seiner Oberfläche (22, 25) Korngrenzen (34) aufweist,
**dadurch gekennzeichnet, dass**
in den Korngrenzen (34) zumindest stellenweise eine Oxidschicht ausgebildet ist,
insbesondere im oberflächennahen Bereich.

19. Bauteil (1),
insbesondere hergestellt durch ein Verfahren nach einem oder mehreren der Ansprüche 1 bis 16,
das eine Oberfläche (22, 25) aufweist,
auf der insbesondere eine keramische Schicht (28, 19) vorhanden ist,
**dadurch gekennzeichnet, dass**
an der Oberfläche (22, 25) Kluften (31) vorhanden sind,
die die Haftung einer auf der Oberfläche (22, 25) liegenden Schicht (19, 28) verbessern.

20. Bauteil nach Anspruch 18 oder 19,
**dadurch gekennzeichnet,**
**dass** das Bauteil (1) ein Substrat (4) aufweist,
**dass** auf dem Substrat (4) eine Korrosionsschutzschicht (7), insbesondere des Typs MCrAlX, vorhanden ist,
die die Oberfläche (22) bildet.
